# EUROPÄISCHE PATENTSCHRIFT

(11) **EP 0 602 305 B1**
(45) Veröffentlichungstag und Bekanntmachung des Hinweises auf die Patenterteilung: **20.12.1995**
(21) Anmeldenummer: 93107341.5
(22) Anmeldetag: 06.05.1993
(51) Int. Cl.: H02B 1/052, H01H 71/02

(54) **An einer Tragschiene befestigbares Installationsgerät**
Electric installation equipment mountable on a supporting rail
Appareil pour installation électrique montable sur un rail porteur

(30) Priorität: 17.12.1992 DE 9217260 U
(43) Veröffentlichungstag der Anmeldung: 22.06.1994
(73) Patentinhaber: Ellenberger & Poensgen GmbH, D-90518 Altdorf (DE)
(72) Erfinder: Kinner, Josef, W-8501 Burgthann (DE)
(74) Vertreter: Tergau, Enno, Dipl.-Ing.

(56) Entgegenhaltungen:
- DE-A- 3 728 907
- DE-A- 3 802 074

## Beschreibung

Die Erfindung betrifft ein elektrisches Installationsgerät mit den Merkmalen des Oberbegriffs des Anspruches 1.

Das Installationsgerät ist mittels seines Gerätegehäuses an einer Tragschiene befestigbar. Hierzu weist das Gerätegehäuse üblicherweise 2 Befestigungselemente auf. Ein Befestigungselement ist im wesentlichen starr an einer Gerätegehäusewand angeformt und klemmt in Aufsetzlage des Gehäusebodens an der Tragschiene eine Schienenlängskante zwischen sich und dem Gehäuseboden ein. Die parallel zur ersten Schienenlängskante verlaufende zweite Schienenlängskante wird in Aufsetzlage des Installationsgerätes zwischen dem Gehäuseboden und einem beweglichen Rastschieber eingeklemmt. Hierbei befindet sich der Rastschieber in seiner Raststellung. Er ist in einer Rastrichtung zwischen seiner Raststellung und einer Lösestellung beweglich. Aufgrund der Beweglichkeit des Rastschiebers wird das Gerätegehäuse während des Aufsetzvorganges nach Art einer Schnappbefestigung an einer Tragschiene befestigt. Zur Lösung der Befestigung wird der Rastschieber in seine Lösestellung verschoben.

Ein derartiges Installationsgerät ist z.B. aus **DE 37 28 907 A1** bekannt. Der dortige Rastschieber ist mittels eines senkrecht zur Tragschienenebene verlaufenden Biegesteges einstückig und beweglich am Gerätegehäuse angeformt. Er ist an dem seiner zur Fixierung der Schienenlängskante dienenden Rastnase abgewandten Ende in Rastrichtung um ein Betätigungsende verlängert. In das Betätigungsende greift ein Betätigungswerkzeug, z.B. eine Schraubendreherklinge ein, um den Rastschieber aus seiner Raststellung in seine Lösestellung zu überführen. Hierbei ist die Bewegung des Betätigungsendes durch eine einstückig am Schalenkörper angeformte Schlitzführung, in der das Betätigungsende einliegt, geführt.

Nachteilig bei dem vorbekannten Installationsgerät ist die Anordnung und Ausgestaltung des Rastschiebers. Der Rastschieber bildet eine Verlängerung des Bewegungsendes des Biegesteges. Damit der Rastschieber in seiner Raststellung eine mechanisch stabile Fixierung des Gerätegehäuses an der Tragschiene bewirkt, muß der Biegesteg trotz seiner erforderlichen Elastizität relativ starr ausgeführt sein, damit der Rastschieber zuverlässig in seiner Raststellung verbleibt und eine ausreichende Druckkraft auf die Tragschiene ausüben kann. Die mechanisch stabile und relativ starre Ausbildung des Biegesteges erfordert jedoch einen erhöhten Kraftaufwand des Benutzers zur Überführung des Rastschiebers aus seiner Raststellung in seine Lösestellung. Hingegen bewirkt eine elastischere Ausbildung des Biegesteges eine geringere Druckkraft des Rastschiebers auf die Tragschiene. Eine stabile Befestigung des Gerätegehäuses an der Tragschiene ist deshalb nicht gewährleistet. Dieses Sicherheitsrisiko wird zusätzlich dadurch erhöht, daß sich der Rastschieber aufgrund des natürlichen Verschleißes des Biegesteges während der Biegevorgänge immer weiter von seiner ursprünglichen Raststellung entfernt und als nur vom Biegesteg selbst getragenes Bauelement im Laufe der Lebensdauer des Biegesteges permanent geringere Druckkräfte auf die Tragschiene ausübt.

Ausgehend von diesen Nachteilen liegt der Erfindung die Aufgabe zugrunde, die mechanische Stabilität der Befestigung des Gerätegehäuses zu verbessern sowie ein bedienungsfreundlicheres Lösen der Befestigung zu ermöglichen. Diese Aufgabe wird die Merkmalskombinations des Anspruches 1 gelöst. Der Rastschieber liegt in der Längsführung ein, so daß er von der Längsführung getragen wird. Auf diese Weise übernimmt die Längsführung die Kraftkomponente zur Fixierung der Rastnase an der Tragschiene. Ohne äußeren Kraftangriff am Betätigungsende verbleibt der Rastschieber deshalb zuverlässig in seiner Raststellung. Außerdem ist die vom Rastschieber auf die Tragschiene ausgeübte Kraft unabhängig von den Materialeigenschaften des Biegesteges. Bei dem Biegesteg muß deshalb nur die ausreichende Elastizität berücksichtigt werden, um mit geringem Kraftaufwand die Verschiebebewegung des Rastschiebers zu bewirken.

Die Längsführung wird weder durch Biegung noch durch sonstige äußere Kräfte beansprucht. Sie bewirkt deshalb eine über die Lebensdauer des Installationsgerätes konstante Haltekraft auf den Rastschieber. Außerdem wird die erforderliche Befestigungswirkung des Rastschiebers durch den natürlichen Verschleiß des Biegesteges aufgrund einer Vielzahl von Befestigungs- und Lösevorgängen nicht beeinträchtigt. Dadurch ist die mechanisch stabile Fixierung des Installationsgerätes an der Tragschiene gewährleistet. Unbeabsichtigte äußere Krafteinwirkungen auf das Gerätegehäuse werden über die gesamte Betriebszeit konstant wirksam kompensiert. Dies wiederum verbessert die Betriebssicherheit des Installationsgerätes.

Die Längsführung bewirkt eine reine Translationsbewegung des Rastschiebers. Die Translationsbewegung ermöglicht gegenüber einer Rotationsbewegung einen geringeren effektiven Verschiebeweg des Rastschiebers während seiner Überführung aus der Raststellung in die Lösestellung. Dadurch ist die Bedienung des Betätigungsendes vereinfacht.

Die durch die Längsführung erzwungene Translationsbewegung des Rastschiebers verhindert, daß der Biegesteg und der mit ihm verbundene Rastschieber nach Art eines Pendels verschwenkt werden können. Da der Biegesteg nicht künstlich verlängerbar ist, bewirkt die Translationsbewegung des Rastschiebers deshalb einerseits eine starke Begrenzung des Verschiebeweges des Rastschiebers im Sinne einer höheren Bedienungsfreundlichkeit und andererseits eine verbesserte Rückstellwirkung des Biegesteges auf den Rastschieber, so daß die mechanisch stabile Befestigung des Gerätegehäuses an der Tragschiene weiter verbessert ist.

Anspruch 2 gewährleistet die mechanische Stabilität zwischen Rastnase und Rastschieber, so daß die Wirkungen der Längsführung auf den Rastschieber auch auf die Rastnase übertragen werden.

Die biegbare Verbindung zwischen Rastschieber und Biegesteg ermöglicht eine Verschwenkung des Biegesteges mit geringem Kraftaufwand. Im Gegensatz zu einer starren Verbindung vermeidet die biegbare Verbindung eventuelle Bruchstellen durch sehr große Biegebeanspruchungen während der Verschiebewegung des Rastschiebers. Die Lebensdauer dieser Bauteile ist deshalb vergrößert.

Anspruch 3 betrifft eine bevorzugte Ausführungsform der biegbaren Verbindung zwischen Rastschieber und Biegesteg. Der Verbundsteg gewährleistet die erforderliche mechanische Stabilität zwischen Rastschieber und Biegesteg zur wirksamen Kraftübertragung während der Verschiebebewegungen. Die Sollbiegestelle ermöglicht auf technisch einfache Weise die Translationsbewegung des Rastschiebers, auch wenn der Biegesteg mittels eines Betätigungswerkzeugs ähnlich einem Pendel auf einer Kreisbahn verschwenkt wird.

Die Anordnung von Verbundsteg und Biegesteg gemäß Anspruch 4 ermöglicht die Einwirkung einer größeren Kraftkomponente des Biegesteges auf den Rastschieber und folglich eine größere Druckkraft der Rastnase auf die Tragschiene. Außerdem bietet die vergrößerte Kraftkomponente eine wirksame Kompensation versehentlicher Kraftangriffe an dem Rastschieber entgegen seiner Raststellung, so daß er sicher in seiner Raststellung verbleibt.

Gemäß den Ansprüchen 5 bis 7 ist ein bedienungsfreundlicher Eingriff des Betätigungswerkzeugs in das Betätigungsende zur Verschiebung des Rastschiebers mit geringem Kraftaufwand möglich. Aufgrund des stumpfen Winkels zwischen der Gehäuseseitenwand und des Biegesteges kann das Betätigungswerkzeug während seines Eingriffs in das Betätigungsende an der Gehäuseseitenwand abgestützt werden. Sie bildet ein Widerlager für das Betätigungswerkzeug, so daß letzteres mit geringem Kraftaufwand bei sehr wirkungsvoller Kraftübertragung auf den Rastschieber verschwenkt werden kann. Gleichzeitig hat diese Gehäuseseitenwand die weitere Funktion eines Begrenzungsanschlags für die Verschwenkung des Betätigungswerkzeugs. Dadurch ist eine übermäßige Biegebeanspruchung des Biegestegs vermieden.

Gemäß Anspruch 8 ist die Längsführung zweischalig aufgebaut. Sie umgreift den Rastschieber beidseitig an seinem Umfang und gewährleistet auf diese Weise, daß der Rastschieber lediglich in Rastrichtung translatorisch bewegt wird. Seitliche Krafteinwirkungen quer zur Rastrichtung beeinträchtigen deshalb die erforderlichen Verschiebebewegungen des Rastschiebers nicht. Da der Rastschieber mit dem Biegesteg und dem Betätigungsende mechanisch verbunden ist, sind auch die beiden letzteren Bauteile vor seitlichen Kraftangriffen verbessert geschützt, so daß die mechanisch stabile Anordnung des Biegesteges und des Betätigungsendes am Gerätegehäuse während der gesamten Betriebszeit erhalten bleibt.

Gemäß Anspruch 9 ist der Rastschieber vor äußeren mechanischen Beschädigungen sehr wirksam geschützt. Die Führungsschalen umgreifen den Rastschieber vorzugsweise formschlüssig, um dessen Bewegungsführung zusätzlich zu verbessern.

Eine nach Anspruch 10 ausgebildete Längsführung begrenzt mit ihren Begrenzungsflächen die Translationsbewegung des Rastschiebers entgegen seiner Raststellung und trägt deshalb ebenfalls zum Schutz des Biegesteges vor übergroßen Biegebeanspruchungen bei.

Gemäß den Ansprüchen 11 und 12 ist die Fertigung der Gehäuseschalen und die Montage des Gerätegehäuses vereinfacht.

Die Elastizität des Biegestegs und des Verbundsteges ermöglicht, daß die Rastschieberhälften und die ihnen zugeordneten Führungsschalen etwa in der gleichen Ebene liegend hergestellt werden, ohne daß der Rastschieber bereits in den Führungsschalen einliegt. Die gleichebige Herstellung unterstützt die schmale Bauweise des Gerätegehäuses. Aufgrund der Elastizität des Biegesteges sowie des angrenzenden Verbundsteges können die Rastschieberhälften nach der Herstellung der Gehäuseschalen in einfacher Weise durch seitliches Ausbiegen in die jeweils zugeordnete Führungsschale eingelegt werden.

Anspruch 13 vereinfacht die Montage der jeweils aus Rastschieber, Verbundsteg und Biegesteg bestehenden Teileinheiten zu einer Einheit. Die Fixiermittel gewährleisten, daß die Teileinheiten im Montagezustand des Gerätegehäuses über dessen gesamte Lebensdauer ortsfest aneinander fixiert sind und ihre Funktionen gemeinsam ausführen. Aufgrund ihrer einstückigen Anformung an den Gehäuseschalen bewirken die im Montagezustand des Gerätegeäuses aneinander ortsfest fixierten Teileinheiten auch eine verbesserte Fixierung der beiden Gehäuseschalen aneinander, so daß die mechanische Stabilität des Gerätegehäuses weiter verbessert ist.

Gemäß Anspruch 14 ist die Fixierung der Teileinheiten bei deren Montage zu der Einheit ohne zusätzliche Arbeitsschritte möglich, da die beiden Gehäuseschalen bei der Montage des Gerätegehäuses ohnehin in Tragschienenrichtung aufeinander zu verschoben werden. Dabei greifen die in Tragschienenrichtung gegenüberliegenden, miteinander korrespondierenden Fixiermittel ineinander ein.

Die Ansprüche 15 und 16 verbessern eine mechanisch stabile Aneinanderlage der Teileinheiten im Montagezustand des Gerätegehäuses.

Der Erfindungsgegenstand wird anhand von in den Figuren dargestellten Ausführungsbeispielen näher erläutert. Es zeigen:
- Fig.1: eine perspektivische Darstellung des an einer Tragschiene befestigten elektrischen Installationsgerätes.
- Fig.2: eine Teilseitenansicht einer in ihrer Aufsetzlage befindlichen Gehäuseschale mit dem Rastschieber in seiner Raststellung.
- Fig. 3: eine perspektivische Darstellung einer Gehäuseschale des Gerätegehäuses.
- Fig. 4: eine perspektivische Darstellung der beiden zu dem Gerätegehäuse zusammensetzbaren Gehäuseschalen.

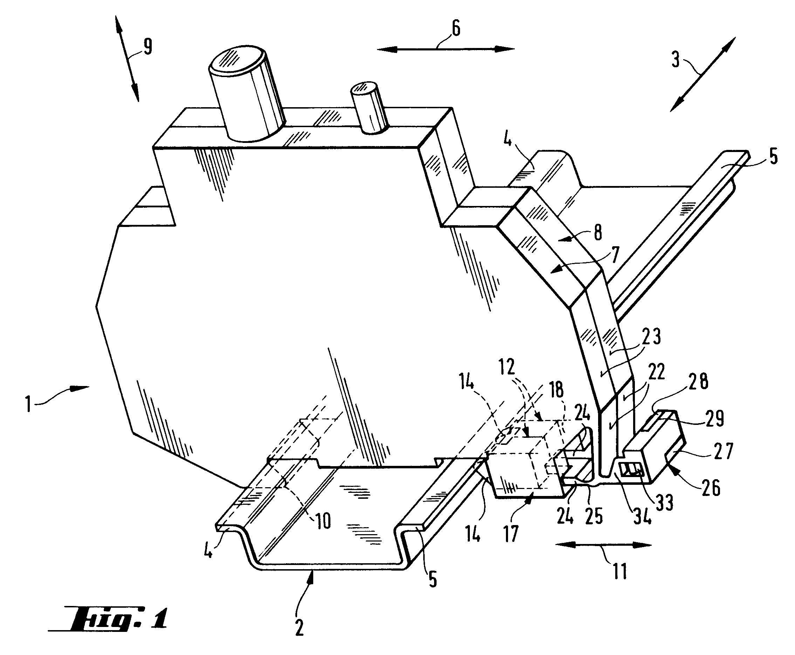

In Fig. 1 befindet sich das elektrische Installationsgerät 1 in seiner Aufsetzlage auf einer Tragschiene 2. Das Installationsgerät 1 ist in diesem Ausführungsbeispiel ein als Überstromschutzschalter ausgebildeter Niederspannungsschalter. Die Längserstreckung der Tragschiene 2 ist in Tragschienenrichtung 3 ausgerichtet. In Tragschienenrichtung 3 gesehen hat die Tragschiene 2 ein C-förmiges Profil. Die parallel zueinander verlaufenden und in Tragschienenrichtung 3 ausgerichteten Schienenabwinklungen 4,5 sind gegenüber den C-Enden der Tragschiene 2 um 90° abgebogen und liegen in einer durch die Tragschienenrichtung 3 und einer Schienenquerrichtung 6 aufgespannten Ebene ein.

Das aus isolierendem Kunststoff bestehende Gerätegehäuse zur Aufnahme der mechanischen, elektromechanischen und/oder elektronischen Bauteile des Installationsgeräts 1 setzt sich aus zwei in ihren Außenkonturen im wesentlichen identisch ausgestalteten Gehäuseschalen 7,8 zusammen. Die aneinanderliegenden Seitenwände der beiden Gehäuseschalen 7,8 können hier nicht näher dargestellte Vorsprünge bzw. Nuten enthalten, um bei der Montage des Gerätegehäuses eine gegenseitige Fixierung der beiden Gehäuseschalen 7,8 zu ermöglichen. Mittels hier ebenfalls nicht dargestellter, die Gehäuseschalen 7,8 in Tragschienenrichtung 3 durchsetzender Bohrungen können die beiden Gehäuseschalen 7,8 z.B. durch Kunststoffschrauben miteinander mechanisch stabil verbunden werden. Die etwa mittige Teilungsebene des Gerätegehäuses ist durch die Schienenquerrichtung 6 und eine senkrecht dazu angeordnete Aufsetzrichtung 9 aufgespannt. Die Teilungsebene ist außerdem senkrecht zur Tragschienenrichtung 3 ausgerichtet.

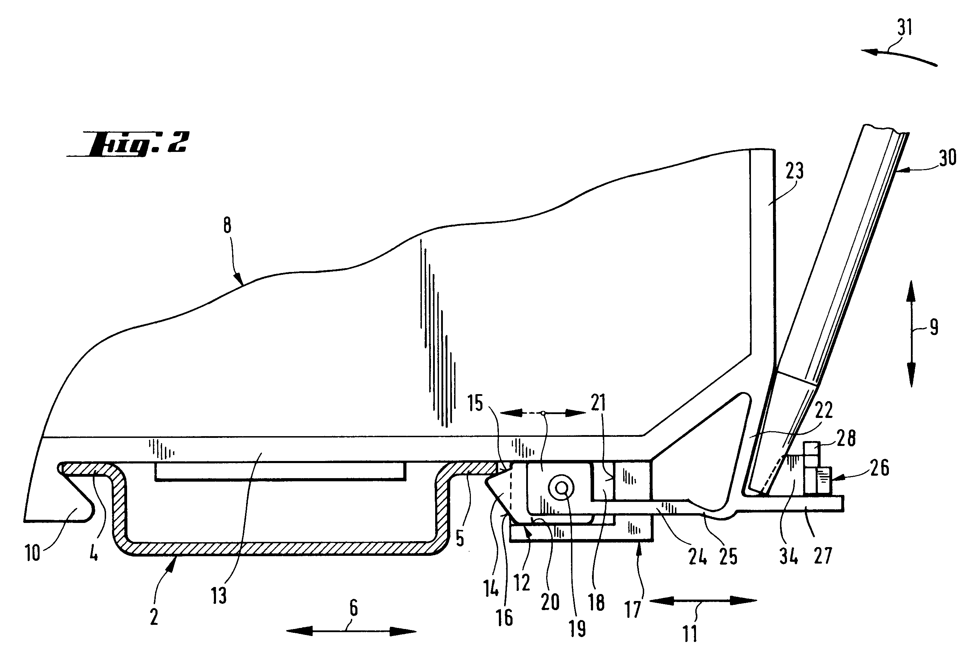

Das montierte Gerätegehäuse des Installationsgeräts 1 wird etwa in Aufsetzrichtung 9 auf die Tragschiene 2 aufgesetzt. Die Gehäuseschalen 7,8 hintergreifen jeweils mit einem einstückig, starr und keilförmig angeformten Rastvorsprung 10, von denen in Fig.2 der Rastvorsprung 10 der Gehäuseschale 8 erkennbar ist, die Schienenabwinklung 4. In Schienenquerrichtung 6 gegenüberliegend ist an den beiden Gehäuseschalen 7,8 jeweils ein in Rastrichtung 11 verschiebbarer Rastschieber 12, von denen in Fig.2 der Rastschieber 12 der Gehäuseschale 8 erkennbar ist, einstückig angeformt. Die Rastrichtung 11 verläuft parallel zur Schienenquerrichtung 6. Die Rastschieber 12 hintergreifen die Schienenabwinklung 5.

In Fig.2 ist erkennbar, daß die Gehäuseschale 8 mit einer in Schienenquerrichtung 6 verlaufenden und als Gehäuseboden 13 wirksamen Gehäuseseitenwand auf den Schienenabwinklungen 4,5 aufsitzt. Die dem Gehäuseboden 13 zugewandte Oberfläche des Rastvorsprungs 10 verläuft in einem spitzen Winkel gegenüber dem Gehäuseboden 13 abgewinkelt. Diese Abwinkelung ermöglicht zu Beginn des Aufsetzvorganges zunächst die unmittelbare Aneinanderlage von Rastvorsprung 10 und Schienenabwinklung 4. Daraufhin werden die Gehäuseschalen 7,8 um eine imaginäre, durch die in Tragschienenrichtung 3 verlaufende Außenkante der Schienenabwinklung 4 gebildete Schwenkachse geschwenkt, bis der Gehäuseboden 13 auf der ihm zugewandten Oberfläche der Abwinklung 4 aufsitzt. Hierbei rastet der Rastschieber 12 in seine Raststellung (Fig.2) ein.

An dem in Fig.2 mit einer etwa rechteckigen Außenkontur versehenen Rastschieber 12 ist eine keilförmige Rastnase 14 einstückig angeformt. In Raststellung des Rastschiebers 12 hintergreift und fixiert ein Fixierkeilschenkel 15 der Rastnase 14 die Außenkante der Schienenabwinklung 5, während der Gehäuseboden 13 auf der Schienenabwinklung 5 aufsitzt. Im Zusammenwirken mit dem Rastvorsprung 10 ist dadurch die ausreichend stabile Befestigung des Gerätegehäuses an der Tragschiene 2 erreicht. Der zweite Keilschenkel ist etwa doppelt so lang wie der Fixierkeilschenkel 15. Die der Tragschiene 2 zugewandte Außenfläche des zweiten Keilschenkels ist als eine Gleitoberfläche 16 wirksam. Während des Aufsetzvorganges gleitet die Gleitoberfläche 16 an der Außenkante der Schienenabwinklung 5 entlang, wodurch der Rastschieber 12 in Rastrichtung 11 der Schienenabwinklung 5 entgegengesetzt bewegt wird. Sobald die Keilspitze der Rastnase 14 die Außenkante der Schienenabwinklung 5 erreicht hat, hintergreift der Fixierkeilschenkel 15 bei weiterem Verschwenken des Gehäusebodens 13 in Richtung der Schienenabwinklung 5 dessen Außenkante. Dadurch wirkt der Rastschieber 12 nach Art einer Aufschnappbefestigung.

Der Rastschieber 12 liegt in einer Führungsschale 17 ein und vollführt dadurch eine reine Translationsbewegung in Rastrichtung 11. Sie ist einstückig am Gehäuseboden 13 angeformt. Zusammen mit dem Gehäuseboden 13 begrenzt sie einen rechteckigen Führungshohlraum 18. In Schienenquerrichtung 6 und der Schienenabwinklung 5 zugewandt ist der Führungshohlraum 18 frei zugänglich, damit die Rastnase 14 die Führungsschale 17 in Raststellung übersteht. In Tragschienenrichtung 3 und der Gehäuseschale 7 zugewandt ist der Führungshohlraum 18 der Gehäuseschale 8 ebenfalls frei zugänglich, damit dessen Rastschieber 12 im Montagezustand des Gerätegehäuses mittels eines in Tragschienenrichtung 3 verlaufenden, zylindrischen Verbundzapfens 19 mit dem Rastschieber 12 der Gehäuseschale 7 als eine Einheit zusammenwirken kann. Die dem Verbundzapfen 19 in Tragschienenrichtung 3 gegenüberliegende Fläche der Führungsschale 17, der Gehäuseboden 13 und die davon in Aufsetzrichtung 9 gegenüberliegende, als Haltefläche 20 wirksame Seitenfläche der Führungsschale 17 tangieren jeweils unmittelbar eine Außenfläche des Rastschiebers 12. Die Reibung der aneinanderliegenden Flächen ist dabei jedoch so gering, daß die erforderliche freie Längsbeweglichkeit des Rastschiebers 12 gewährleistet ist. Der Rastschieber 12 liegt auf der Haltefläche 20 auf und übt dadurch in seiner Raststellung über die Lebensdauer des Gerätegehäuses eine konstante Druckkraft auf die Schienenabwinklung 5 aus. In Rastrichtung 11 der Rastnase 14 entgegengesetzt ist der Verschiebeweg des Rastschiebers 12 durch eine als Begrenzungsfläche 21 wirksame Seitenfläche der Führungsschale 17 begrenzt. Die Begrenzungsfläche 21 liegt in der durch die Aufsetzrichtung 9 und Tragschienenrichtung 3 aufgespannten Ebene ein.

Während der Rastschieber 12 mit der Rastnase 14 starr verbunden ist, ist er mit einem einstückig an die Gehäuseschale 8 angeformten Biegesteg 22 biegbar verbunden. Der stabartige Biegesteg 22 bildet eine Verlängerung des bodenseitigen Endes einer in Aufsetzrichtung 9 verlaufenden Gehäuseseitenwand 23 der Gehäuseschale 8. Die Gehäuseseitenwand 23 und der Biegesteg 22 schließen einen stumpfen Winkel ein. In Aufsetzrichtung 9 übersteht der Biegesteg 22 den Gehäuseboden 13 und ist dabei zur Führungsschale 17 hin ausgerichtet. Der Biegesteg 22 ist elastisch und ermöglicht dadurch die Bewegungen des Rastschiebers 12 in Rastrichtung 11.

Über einen in Schienenquerrichtung 6 verlaufenden, stabartigen Verbundsteg 24 ist der Rastschieber 12 mit dem Biegesteg 22 verbunden. Der Biegesteg 22 und der Verbundsteg 24 schließen einen stumpfen Winkel ein. Im Bereich des Winkelscheitels ist die dem Biegesteg 22 in Aufsetzrichtung 9 zugewandte Oberfläche des Verbundsteges 24 muldenartig eingeschnitten, so daß dort seine Wandstärke geschwächt ist. Diese Wandstärkenschwächung 25 dient als Sollbiegestelle und ermöglicht die erforderliche Schwenkbeweglichkeit zwischen Biegesteg 22 und Verbundsteg 24. An dem der Wandstärkenschwächung 25 zugewandten Bewegungsende des Biegesteges 22 ist einstückig ein Betätigungsende 26 mit einem in Schienenquerrichtung 6 verlaufenden Auflagesteg 27 angeformt. In Aufsetzrichtung 9 sind der Auflagesteg 27 und der Verbundsteg 24 etwa in gleicher Höhe ausgerichtet am Bewegungsende des Biegesteges 22 angeformt. Der Auflagesteg 27 schließt mit dem Biegesteg 22 einen spitzen Winkel ein.

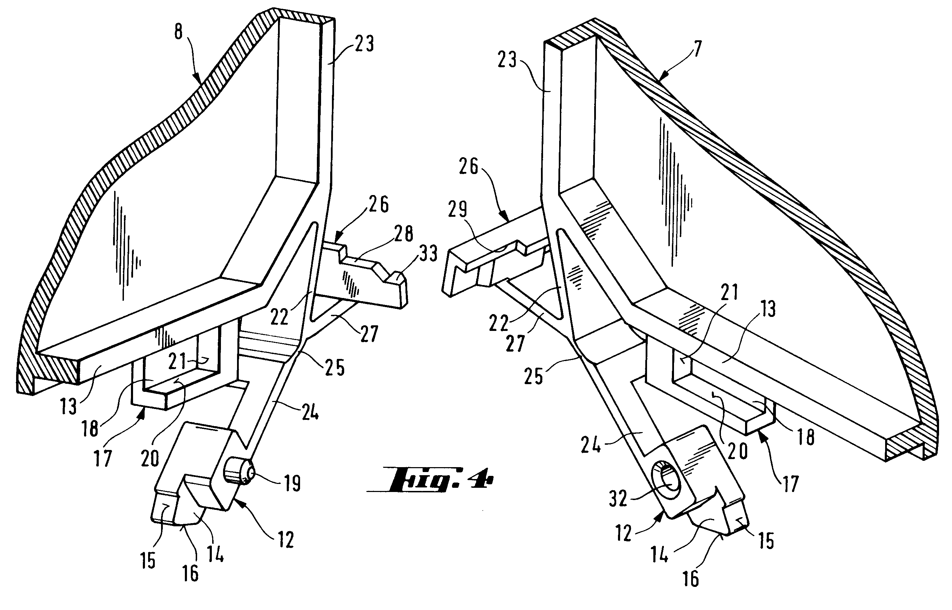

Das Betätigungsende 26 ist vorzugsweise starr ausgebildet. An dem der Wandstärkenschwächung 25 in Schienenquerrichtung 6 gegenüberliegenden Endbereich des Auflagesteges 27 ist ein sich im wesentlichen in Aufsetzrichtung 9 erstreckender Raststeg 28 einstückig angeformt (Fig. 2). In Tragschienenrichtung 3 übersteht der Raststeg 28 den Auflagesteg 27 einseitig, um bei der Montage der Gehäuseschalen 7,8 in eine Rastnut 29 des Betätigungsendes 26 der Gehäuseschale 7 einzugreifen und eine mechanisch stabile Fixierung der beiden Gehäuseschalen 7,8 zu bewirken (Fig.4).

In Fig.2 greift ein als Schraubendreherklinge ausgebildetes Betätigungswerkzeug 30 mit seinem Klingenende in den vom Biegesteg 22, Auflagesteg 27 und Raststeg 28 begrenzten Innenraum ein. An dem gehäuseseitigen Ende des Biegesteges 22 stützt sich das Betätigungswerkzeug 30 ab. Das gehäuseseitige Ende des Biegesteges 22 bildet ein mechanisch stabiles Widerlager, so daß das Betätigungswerkzeug 30 im Betätigungsende 26 fixiert mit geringem Kraftaufwand in Schwenkrichtung 31 geschwenkt werden kann. Das gehäuseseitige Ende des Biegesteges 22 bildet hierbei den Drehpunkt des bei seiner Verschwenkung als zweiarmiger Hebel wirkenden Betätigungswerkzeugs 30.

Bei Verschwenkung des Betätigungswerkzeugs 30 in Schwenkrichtung 31 wird der Rastschieber 12 in Rastrichtung 11 der Schienenabwinklung 5 entgegengesetzt in seine Lösestellung überführt. Auf diese Weise ist die Aufschnappbefestigung des Gerätegehäuses lösbar. Der Verschiebeweg des Rastschiebers 12 ist durch die Begrenzungsfläche 21 und teilweise auch durch die begrenzte Elastizität des Biegesteges 22 limitiert.

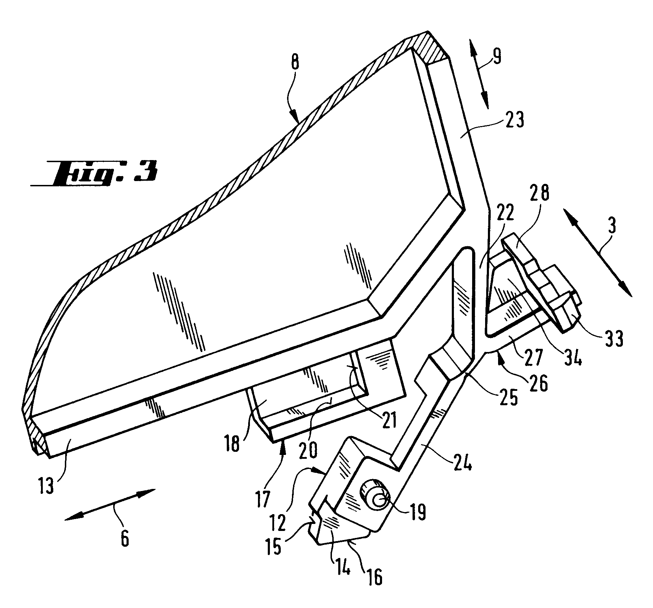

In Fig.3 ist erkennbar, daß sämtliche Funktionsteile für die Aufschnappbefestigung und zu deren Lösung einstückig an der Gehäuseschale 8 angeformt sind. Dies erleichtert deren Herstellung. Das nachträgliche Einlegen des Rastschiebers 12 in den Hohlraum 18 der Führungsschale 17 ist problemlos möglich, da der Biegesteg 22 und im begrenzten Ausmaß auch der Verbundsteg 24 elastisch ausgebildet sind. Damit die Verschiebebewegungen des Rastschiebers 12 in Schienenquerrichtung 6 nicht behindert werden, ist der Verbundsteg 24 in seinem der Führungsschale 17 zugewandten Bereich rechteckig eingeschnitten. Der Einschnitt schließt sich unmittelbar an das verbundstegseitige Ende des Rastschiebers 12 an. Im Bereich der Wandstärkenschwächung 25 erstreckt sich der Verbundsteg 24 in Tragschienenrichtung 3 jedoch ebensoweit wie die Wandstärkenschwächung 25 selbst und wie der Biegesteg 22. Dadurch erhält der Verbundsteg 24 eine L-förmige Außenkontur. Deren L-Grund schlägt bei der Überführung des Rastschiebers 12 in dessen Raststellung an die Führungsschale 17 an und wirkt deshalb als Anschlag für die Raststellung.

In Fig. 4 ist erkennbar, daß der Rastschieber 12 den Führungshohlraum 18 der Führungsschale 17 in Tragschienenrichtung 3 übersteht. Auf dieser Überstandseite schließt der Rastschieber 12 bündig mit der nicht eingeschnittenen Seite des Verbundsteges 24 ab. Die Rastnase 14 hingegen ist gegenüber der dem Verbundzapfen 19 zugeordneten Oberfläche des Rastschiebers 12 in Tragschienenrichtung 3 versetzt angeordnet und schließt mit der dem Verbundzapfen 19 gegenüberliegenden Oberfläche des Rastschiebers 12 bündig ab. Die Ausdehnung der Rastnase 14 und die sie sowie den Rastschieber 12 tragenden Tragfläche 20 der Führungsschale 17 erstrecken sich Tragschienenrichtung 3 etwa gleich weit.

In Fig. 4 ist ebenfalls erkennbar, daß die beiden zum Gerätegehäuse montierbaren Gehäuseschalen 7,8 mit Ausnahme des Verbundzapfens 19, einer zu diesem korrespondierenden Verbundbohrung 32 des der Gehäuseschale 7 zugeordneten Rastschiebers 12 sowie mit Ausnahme des Raststeges 28 der Gehäuseschale 8 und der dazu korrespondierenden Rastnut 29 der Gehäuseschale 7 identisch ausgestaltet. Auch dies erleichtert die Herstellung des Gerätegehäuses.

Der Raststeg 28 weist an seinem der Gehäuseschale 7 zugewandten Überstandsende eine Rastnase 33 auf, die bei der Montage der Gehäuseschalen 7,8 eine Verrastung des Raststeges 28 und der Rastnut 29 bewirkt (Fig.1). Dadurch ist die mechanische Stabilität des Betätigungsendes 26 sowie auch des gesamten Gerätegehäuses verbessert. Der Raststeg 28 und die Rastnut 29 sind an ihren in Tragschienenrichtung 3 abgewandten Außenkanten in Richtung der Biegestege 22 jeweils um eine Stegseitenwand 34 verlängert. Die beiden Stegseitenwände 34 sind in Tragschienenrichtung 3 gesehen deckungsgleich und erstrecken sich in Aufsetzrichtung 9 etwas niedriger als der Raststeg 28 und die Rastnut 29. Die Aufbauhöhe des den Biegestegen 22 zugewandten Kantenbereichs der Stegseitenwände 34 fällt in Aufsetzrichtung 9 kontinuierlich ab. Die Stegseitenwände 34 ermöglichen eine verbesserte Abstützung des Betätigungswerkzeugs 30 in Tragschienenrichtung 3. Die beiden Führungsschalen 17, die beiden Rastschieber 12, die beiden Verbundstege 24, die beiden Biegestege 22 sowie die Auflagestege 27 liegen mit ihren einander zugewandten Flächen im Montagezustand der Gehäuseschalen 7,8 unmittelbar aneinander an und bilden eine zweiteilige, mechanisch stabile Einheit. Die Teilungsebene dieser Einheit entspricht dabei der durch die Aufsetzrichtung 9 und die Rastrichtung 11 aufgespannten Teilungsebene des aus den beiden Gehäuseschalen 7,8 bestehenden Gerätegehäuses.

## Patentansprüche

1. Für die Befestigung in Aufsetzlage auf einer Tragschiene (2) ausgebildetes elektrisches Installationsgerät (1), insbesondere Niederspannungsschalter, mit einem einstückig an eine aus isolierendem Kunststoff bestehende Gerätegehäusewand angeformten Rastschieber (12), der
- außerhalb des Gehäusebodens quer zur Aufsetz (9)- und zur Tragschienenrichtung (3) in Rastrichtung (11) beweglich ist,
- über einen in Rastrichtung (11) federelastischen Biegesteg (22) schwenkbar mit einer Gehäusewand verbunden ist,
- in Rastrichtung (11) mit einer Rastnase (14) die Tragschiene (2) hintergreift und
- über ein der Rastnase (14) abgewandtes Betätigungsende (26) gegen die Federelastizität des Biegesteges (22) aus seiner Raststellung in eine Lösestellung rückführbar ist,
dadurch gekennzeichnet,
daß der Rastschieber (12) zwischen seiner Rastnase (14) und dem Biegesteg (22) in einer an die Gehäusewand angesetzten Längsführung geführt ist.

2. Gerät nach Anspruch 1,
dadurch gekennzeichnet,
- daß die Rastnase mit (14) dem Rastschieber (12) starr und
- daß der Rastschieber (12) mit dem Biegesteg (22) biegbar verbunden ist.

3. Gerät nach Anspruch 1 oder 2, bei welchem die Bewegungsrichtung des Rastschiebers (12) einen insbesondere etwa rechten Winkel mit der Längserstreckung des Biegesteges (22) bildet,
gekennzeichnet durch
einen zwischen Rastschieber (12) und Biegesteg (22) angeordneten Verbundsteg (24) mit einer Wandstärkenschwächung (25) als Sollbiegestelle.

4. Gerät nach einem oder mehreren der vorhergehenden Ansprüche,
dadurch gekennzeichnet,
daß der Verbundsteg (24) etwa in Rastrichtung (11) des Rastschiebers (12) verläuft und einen stumpfen Winkel mit dem Biegesteg (22) bildet.

5. Gerät nach einem oder mehreren der vorhergehenden Ansprüche,
dadurch gekennzeichnet,
daß das gehäuseseitige Ende des Biegesteges (22) aus dem bodenseitigen Ende einer Gehäuseseitenwand (23) unter Bildung eines stumpfen Winkels mit dieser hinaussteht.

6. Gerät nach Anspruch 5,
dadurch gekennzeichnet,
daß das Betätigungsende (26) auf der dem Rastschieber (12) abgewandten Seite an das Bewegungsende des Biegesteges (22) angeformt ist und in Aufsetzrichtung (9) unterhalb des gehäuseseitigen Biegestegendes liegt.

7. Gerät nach Anspruch 6,
dadurch gekennzeichnet,
daß das Betätigungsende unterhalb des Winkelscheitels zwischen Biegesteg (22) und Gehäuseseitenwand (23) liegt.

8. Gerät nach einem oder mehreren der vorhergehenden Ansprüche mit einem zweischaligen Gerätegehäuse, dessen etwa mittige Teilungsebene in Aufsetzrichtung (9) und in Rastrichtung (11) verläuft,
dadurch gekennzeichnet,
daß die Längsführung des Rastschiebers (12) durch jeweils eine an eine Gehäusehälfte [= Gehäuseschale (7), Gehäuseschale (8)] angeformte Führungsschale (17) gebildet ist, die den Rastschieber (12) beidseitig an seinem Umfang umgreifen.

9. Gerät nach Anspruch 8,
dadurch gekennzeichnet,
daß die Führungsschalen (17) den Rastschieber (12) in dessen Umfangsrichtung in sich geschlossen umgreifen.

10. Nach Anspruch 8 oder 9,
dadurch gekennzeichnet,
daß die Führungsschalen (17) an ihrem der Rastnase (14) in Rastrichtung (11) abgewandten Ende in Aufsetz- (9) und in Tragschienenrichtung (3) verlaufende Begrenzungsflächen zur Begrenzung der Verschiebebewegung des Rastschiebers (12) entgegen seiner Raststellung aufweisen.

11. Gerät nach einem oder mehreren der Ansprüche 8 bis 10,
gekennzeichnet durch,
eine Zweiteiligkeit der aus den Führungsschalen (17) gebildeten Längsführung mit der Teilungsebene des Gerätegehäuses als Symmetrieebene.

12. Gerät nach einem oder mehreren der vorhergehenden Ansprüche,
gekennzeichnet durch
eine Zweiteiligkeit der aus Rastschieber (12), Verbundsteg (24) und Biegesteg (22) gebildeten Einheit mit der Teilungsebene des Gerätegehäuses als Symmetrieebene.

13. Gerät nach Anspruch 12,
dadurch gekennzeichnet,
daß die beiden Teileinheiten
- jeweils einstückig an einer Gehäuseschale (7,8) angeformt sind und
- im Montagezustand des Gerätegehäuses durch an ihnen angeformte Fixiermittel zu der Einheit verbunden sind.

14. Gerät nach Anspruch 13,
dadurch gekennzeichnet,
daß die Fixiermittel der Teileinheiten in Tragschienenrichtung (3) gegenüberliegend angeordnet sind und im Montagezustand des Gerätegehäuses ineinandergreifen.

15. Gerät nach Anspruch 14,
gekennzeichnet durch
einen Formschlußeingriff der Fixiermittel bestehend aus Verbundzapfen (19) und Verbundbohrung (32).

16. Gerät nach Anspruch 14,
gekennzeichnet durch
eine Verrastung der Fixiermittel bestehend aus Raststeg (28) und Rastnut (29).

## Claims

1. An electrical installation device (1), in particular a low voltage switch, designed for being secured in the fitted position on a supporting rail (2), with an engagement slide (12) integrally formed on the casing wall of the device, consisting of an insulating material, which slide
- is movable in the engagement direction (11) transversely to the fitting direction (9) and to the direction (3) of the supporting rail,
- is pivotably connected to a casing wall via a-bending member (22) that is spring-loaded in the engagement direction (11),
- engages behind the supporting rail (2) with an engagement projection (14) and
- can be returned from its engagement position against the spring resilience of the bending member (22) into a releasing position by means of an actuating end (26) that is remote from the engagement projection (14),
characterized in that
the engagement slide (12) is guided between its engagement projection (14) and the bending member (22) in a longitudinal guide attached to the casing wall.

2. A device according to claim 1,
characterized in that
- the engagement projection (14) is rigidly connected to the engagement slide (12) and
- that the engagement slide (12) is flexibly connected to the bending member (22).

3. A device according to claim 1 or 2, wherein the direction of movement of the engagement slide (12) forms an angle, in particular, approximately a right angle, with the longitudinal reach of the bending member (22),
characterized by
a connecting member (24) arranged between the engagement slide (12) and the bending member (22) as the intended bending place.

4. A device according to one or more of the preceding claims,
characterized in that
the connecting member (24) extends approximately in the engagement direction (11) of the engagement slide (12) and forms an obtuse angle with the bending member (22).

5. A device according to one or more of the preceding claims,
characterized in that
the end of the bending member (22) on the side of the casing projects from the end on the bottom side of a side wall (23) of the casing, forming an obtuse angle therewith.

6. A device according to claim 5,
characterized in that
the actuating end (26) is formed on the side remote from the engagement slide (12) on the moving end of the bending member (22) and lies in the fitting direction (9) beneath the end of the bending member on the side of the casing.

7. A device according to claim 6,
characterized in that
the actuating end lies beneath the apex of the angle between the bending member (22) and the casing side wall (23).

8. A device according to one or more of the preceding claims with a two-shell casing for the device, whose approximately central parting plane extends in the fitting direction (9) and in the engagement direction (11),
characterized in that
the longitudinal guide of the engagement slide (12) is constituted by one guide shell (17) each, formed on a casing half [= casing shell (7), casing shell (8)] which surround the engagement slide (12) on both sides on its periphery.

9. A device according to claim 8,
characterized in that
the guide shells (17) surround the engagement slide (12) in its peripheral direction, being closed in themselves.

10. A device according to claim 8 or 9,
characterized in that
the guide shells (17) have at their end remote from the engagement projection (14) in the engagement direction (11), boundary faces extending in the fitting direction (9) and in the direction of the supporting rail, for limiting the displacement movement of the engagement slide (12) against its engagement position.

11. A device according to one or more of claims 8 to 10,
characterized by
a two-part structure of the longitudinal guide formed by the guide shells (17), with the parting plane of the casing of the device as the plane of symmetry.

12. A device according to one or more of the preceding claims,
characterized by
a two-part structure of the unit formed by the engagement slide (12), the connecting member (24) and the bending member (22), with the parting plane of the casing of the device as the plane of symmetry.

13. A device according to claim 12,
characterized in that
the two part units
- are each integrally formed on a casing shell (7, 8) and
- in the assembled state of the casing of the device, are combined into the unit by fixing means that are formed on them.

14. A device according to claim 13,
characterized in that
the fixing means of the part units are arranged opposite each other in the direction (3) of the supporting rail and engage in each other in the assembled state of the casing of the device.

15. A device according to claim 14,
characterized by
a conjugate engagement of the fixing means consisting of a connecting pin (19) and a connecting bore (32).

16. A device according to claim 14,
characterized by
an engagement of the fixing means consisting of an engagement member (28) and an engagement groove (29).

## Revendications

1. Appareil pour installation électrique (1) réalisé pour la fixation en applique sur un rail porteur (2), en particulier commutateur basse tension, comprenant un coulisseau à encliquetage (12) formé d'une seule pièce sur une paroi d'un boîtier de l'appareil, réalisé en matière plastique isolante,
- ledit coulisseau étant mobile à l'extérieur du fond du boîtier dans la direction d'encliquetage (11), et transversalement à la direction d'application (9) et à la direction (3) du rail porteur,
- ledit coulisseau étant relié en pivotement à une paroi du boîtier au moyen d'un voile flexible (22) élastique dans la direction d'encliquetage (11),
- et accrochant le rail porteur (2) par l'arrière dans la direction d'encliquetage (11) au moyen d'un doigt d'encliquetage (14),
- et le coulisseau pouvant être ramené depuis sa position d'encliquetage dans une position de libération au moyen d'une extrémité d'actionnement (26) détournée du doigt d'encliquetage (14) et à l'encontre de l'élasticité du voile flexible (22),
caractérisé en ce que le coulisseau à encliquetage (12) est guidé entre son doigt d'encliquetage (14) et le voile flexible (22) dans un guidage allongé placé sur la paroi du boîtier.

2. Appareil selon la revendication 1, caractérisé en ce que le doigt d'encliquetage (14) est relié rigidement au coulisseau à encliquetage (12), et en ce que le coulisseau à encliquetage (12) est relié de manière flexible à l'âme flexible (22).

3. Appareil selon l'une ou l'autre des revendications 1 et 2, dans lequel la direction de déplacement du coulisseau à encliquetage (12) forme un angle, en particulier approximativement droit, avec l'extension longitudinale du voile flexible (22),
caractérisé en ce qu'il est prévu entre le coulisseau à encliquetage (12) et le voile flexible (22) un voile composite (24) qui comporte un amincissement d'épaisseur (25) en tant qu'emplacement de flexion de consigne.

4. Appareil selon l'une quelconque des revendications précédentes, caractérisé en ce que le voile composite (24) s'étend approximativement dans la direction d'encliquetage (11) du coulisseau à encliquetage (12) et forme un angle obtus avec le voile flexible' (22).

5. Appareil selon l'une quelconque des revendications précédentes, caractérisé en ce que l'extrémité côté boîtier du voile flexible (22) sort de l'extrémité côté fond d'une paroi latérale du boîtier (23) en formant un angle obtus avec cette paroi.

6. Appareil selon la revendication 5, caractérisé en ce que l'extrémité d'actionnement (26) est formée sur l'extrémité mobile du voile flexible (22) du côté détourné du coulisseau à encliquetage (12), et en ce qu'elle est située dans la direction d'application (9) au-dessous de l'extrémité du voile flexible côté boîtier.

7. Appareil selon la revendication 6, caractérisé en ce que l'extrémité d'actionnement est située au-dessous du sommet de l'angle formé entre le voile flexible (22) et la paroi latérale (23) du boîtier.

8. Appareil selon l'une quelconque des revendications précédentes, comprenant un boîtier en deux coquilles, dont le plan de séparation situé approximativement au centre s'étend dans la direction d'application (9) et dans la direction d'encliquetage (11), caractérisé en ce que le guidage allongé du coulisseau à encliquetage (12) est formé par une goulotte de guidage (17) formée sur chaque moitié de boîtier (coques 7 et 8 du boîtier), qui entourent le coulisseau à encliquetage (12) des deux côtés sur sa périphérie.

9. Appareil selon la revendication 8, caractérisé en ce que les goulottes de guidage (19) entourent le coulisseau à encliquetage (12) dans sa direction périphérique, en étant refermées sur elles-mêmes.

10. Appareil selon l'une ou l'autre des revendications 8 et 9, caractérisé en ce que les goulottes de guidage (17) présentent des surfaces de délimitation qui s'étendent dans la direction d'application (9) et dans la direction (3) du rail porteur, sur leurs extrémités détournées du doigt d'encliquetage (14) dans la direction d'encliquetage (11), afin de délimiter le déplacement du coulisseau à encliquetage (12) en sens contraire de sa position d'encliquetage.

11. Appareil selon l'une quelconque des revendications 8 à 10, caractérisé en ce que le guidage longitudinal formé par les goulottes de guidage (17) est réalisé en deux parties, avec comme plan de symétrie le plan de séparation du boîtier de l'appareil.

12. Appareil selon l'une quelconque des revendications précédentes, caractérisé en ce que l'unité formée par le coulisseau à encliquetage (12), le voile composite (24) et le voile flexible (22) est constituée en deux parties, avec comme plan de symétrie le plan de séparation du boîtier de l'appareil.

13. Appareil selon la revendication 12, caractérisé en ce que les deux unités partielles sont formées chacune d'une seule pièce sur une coque (7,8) du boîtier et sont reliées afin de former ladite unité à l'aide d'organes de fixation formés sur elles-mêmes dans la situation de montage de boîtier de l'appareil.

14. Apparaeil selon la revendication 13, caractérisé en ce que les organes de fixation des unités partielles sont agencés à l'opposé de la direction (3) du rail porteur et s'engagent les une dans les autres dans la situation de montage du boîtier de l'appareil.

15. Apparail selon la revendication 14, caractérisé en ce que les organes de fixation sont composés d'un tenon composite (19) et d'un perçage composite (32) et engagés par coopération de formes.

16. Appareil selon la revencidation 14, caractérisé en ce que les organes de fixation sont composés d'une nervure d'enliquetage (28) et d'une gorge d'encliquetage (29) et coopèrent par encliquetage.
